# EUROPEAN PATENT SPECIFICATION

(11) **EP 1 120 888 B1**
(45) Date of publication and mention of the grant of the patent: **30.03.2005**
(21) Application number: 99914743.2
(22) Date of filing: 14.04.1999
(51) Int. Cl.: H02K 29/00, H02K 11/00

(54) **BRUSHLESS MOTOR**
BÜRSTENLOSER MOTOR
MOTEUR SANS BALAIS

(30) Priority: 28.09.1998 JP 27262598
(43) Date of publication of application: 01.08.2001
(73) Proprietor: Zexel Valeo Climate Control Corporation, Ohsato-gun, Saitama 360-0193 (JP)
(72) Inventor: ANDO, Koji, Zexel Valeo Climate Control Corp., Osato-gun, Saitama 360-0193 (JP); HORIUCHI, Kazuyoshi, Zexel Valeo Climate Contr. Co, Osato-gun, Saitama 360-0193 (JP); ARAI, Kanta, Zexel Valeo Climate Control Corp., Osato-gun, Saitama 360-0193 (JP)
(74) Representative: Gesthuysen, von Rohr & Eggert
(86) International application number: PCT/JP1999/001970
(87) International publication number: WO 2000/019587

(56) References cited:
- JP-A- 7 245 375
- JP-A- 9 134 654
- JP-A- 10 201 210
- JP-U- 48 083 333
- JP-U- 63 178 052
- US-A- 3 763 454

## Description

The present invention relates to a brushless motor mainly employed in a fan in an air-conditioning system for vehicles.

Brushless motors in the prior art include that disclosed in Japanese Unexamined Utility Model Publication No. H 2-139473. This brushless motor comprises a rotatably mounted rotor having a field magnet, a stator that faces the rotor to generate a rotating magnetic field and a means for excitation that excites the stator. In the brushless motor, by sequentially exciting a plurality of arched ends of the stator formed along the radial direction with the means for excitation, a rotating magnetic field is generated, and the rotor is caused to rotate as the magnet provided at the rotor is repeatedly attracted and repulsed by the rotating magnetic field.

In the brushless motor, the means for excitation is constituted of an exciting coil wound around the core of the stator and a means for switching that controls the direction of the current flowing through the exciting coil, and the means for switching is normally constituted of a plurality of field effect transistors (FETs). These FETs control the direction of the current flowing to the exciting coil by controlling signals applied to the gate terminals of the individual FETs, and since a great quantity of heat (approximately 150°C) is normally generated due to the flow of a relatively large current, each FET is provided with a heat sink. Under normal circumstances, the heat sink is formed from aluminum or an aluminum alloy by taking into consideration the thermal conductivity, the ease of forming, the weight and the like.

However, if the brushless motor described above is mounted at an air-conditioning control apparatus for vehicles operated in a cold climate, dry snow and dust taken in together with the outside air through the outside air induction port of the vehicle become electrically charged due to friction against the fan of the brushless motor or the like, which, in turn, results in them coming into contact with the heat sinks exposed from the case housing to electrically charge the heat sinks. As a result, the voltage from the static electricity may reach approximately 7 KV. In such a case, the static electricity becomes discharged into the field effect transistors on the control board, thereby causing the problem of breakdown of the FETs whose voltage withstanding capability is approximately 5 KV.

In addition, a thermal fuse is provided in the vicinity of the heat sinks at the brushless motor in order to protect the electronic control board primarily from the adverse affect of heat from the heat sinks, i.e., heat transferred by the electronic parts (field effect transistors) at which the heat sinks are mounted, so that the circuit is turned off if the temperature of the board or the air temperature reaches a level equal to or higher than a specific temperature, to stop the operation of the circuit.

Accordingly, an object of the present invention is to provide a brushless motor having a means for protection that protects the electronic parts and the like provided on the control board both from the static electricity and the heat at the heat sinks by adopting a simple mechanism.

### DISCLOSURE OF THE INVENTION

In order to achieve the object described above, the brushless motor according to the present invention, comprising a rotating shaft, a rotor secured to the rotating shaft, a plurality magnets provided at the internal circumferential surface of the rotor, a stator that faces the magnets and generates a rotating magnetic field, an exciting coil wound around the stator, a control board having a drive circuit provided with a plurality of means for switching capable of switching the direction of an electric current supplied to the exciting coil as necessary, a case housing that houses the control board and heat a sink constituted of a contact portion that comes into contact with the plurality of means for switching and a heat radiating portion exposed to the outside of the case housing, is further provided with a protective member achieved by integrating a potential-equalizing mechanism that equalizes the potential at the heat sink to the potential at one side of the power supply line to the drive circuit provided on the control board and a thermal fuse mechanism provided on the control board.

By providing a protective member achieved by integrating a potential-equalizing mechanism that equalizes the potential at the heat sink to the potential at one side of the power supply line to the drive circuit provided upon the control board and a thermal fuse mechanism provided on the control board, the static electricity generated at the heat sink can be made to flow toward the circuit to prevent an increase in the electrostatic voltage and, at the same time, to protect against high temperatures since the circuit is cut off whenever an increase in the temperature occurs due to the heat generated at the electronic parts (FETs) mounted at the heat sink through a single member, to achieve the object.

In addition, in the protective member, the thermal fuse mechanism should be constituted of a spring portion bridging between a power supply line on one side and a power supply line on the other side line in the control board wiring and achieving a specific degree of elasticity and solderings that secure each end of the spring portion to one of the lines and becomes melted at a specific temperature, whereas the potential-equalizing mechanism should be constituted of a shorting portion that extends out of one end of the spring portion and comes in contact with the heat sink.

Alternatively, in the protective member, the thermal fuse mechanism should be constituted of a spring portion bridging between a power supply line on one side and a power supply line on the other side line in the control board wiring and achieving a specific degree of elasticity, a soldering that secures one end of the spring portion to one of the lines and becomes melted at a specific temperature and a clip portion that secures the other end of the spring portion to the control board, whereas the potential-equalizing mechanism should be constituted of a shorting portion that extends out of the clip portion at one end of the spring portion and comes in contact with the heat sink.

As a further alternative, in the protective member, the thermal fuse mechanism may be constituted of a block type thermal fuse bridging between a power supply line on one side and a power supply line on the other side line in the control board wiring, whereas the potential-equalizing mechanism may be achieved by constituting the thermosensitive surface of the block type thermal fuse with a conductor and placing it in contact with the heat sink.

### BRIEF DESCRIPTION OF THE DRAWINGS

FIG. 1 is a sectional view illustrating the structure of the brushless motor according to the present invention;
FIG. 2 is a partial sectional view in an enlargement of the area around the heat sink in a first embodiment;
FIG. 3 is a partial sectional view in an enlargement of the protective member in the first embodiment;
FIG. 4 is a partial sectional view in an enlargement of the protective member in a second embodiment; and
FIG. 5 is a partial sectional view in an enlargement of the protective member in a third embodiment.

### BEST MODE FOR CARRYING OUT THE INVENTION

The following is a more detailed explanation of the present invention, given in reference to the attached drawings.

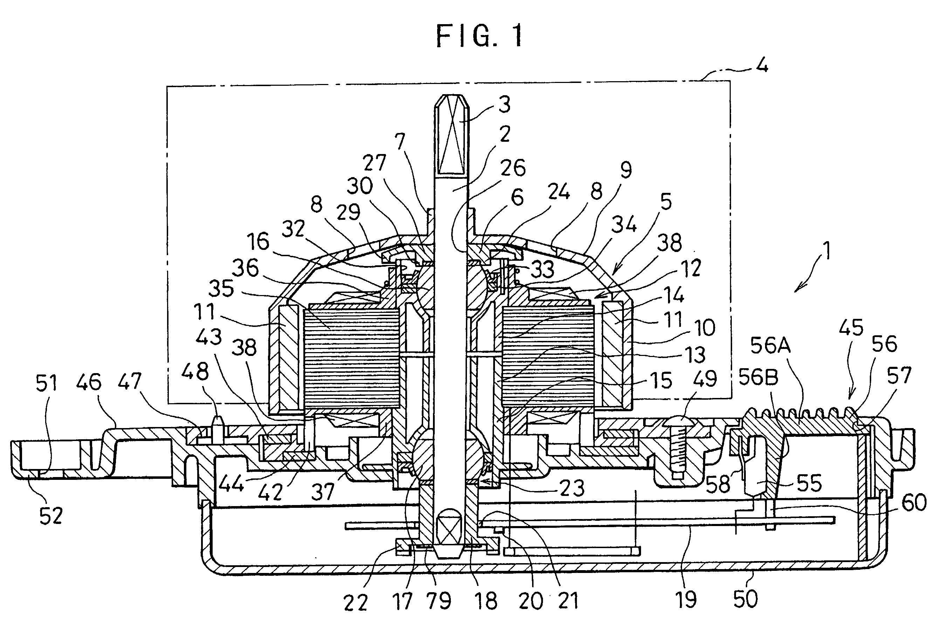

A brushless motor 1 in FIG. 1, which may be used in a fan in an air-conditioning system for vehicles, for instance, comprises a rotating shaft 2 to which a sirocco-type fan 4 is secured, a rotor 5 secured to the rotating shaft 2, a stator 12 that faces the rotor 5 to generate a rotating magnetic field, a control board 19 wired with an excitation circuit that supplies an exciting current to the stator 12 and a case housing 45 that houses the control board 19.

The case housing 45 comprises an upper case member 46, a lower case member 50 constituting a second case and a lid 47, with the control board 19 provided therein. At the upper case member 46, a mounting portion 52 having a screw hole 51 to be used when mounting the upper case member 46 at the brushless motor 1 formed therein and an opening 57 through which a heat sink 56 having a plurality of field effect transistors (FETs) 55 (6 FETs under normal circumstances) each constituting a means for switching that switches the power supply to an exciting coil 38 wound around the stator 12 secured thereto is exposed are formed. It is to be noted that the upper case member 46 and the lid 47 constitute a first case whereas the lower case member 50 constitutes a second case.

The rotating shaft 2 is rotatably held by bearings 16 and 17. The bearings 16 and 17 are secured to an upper bearing holder 14 and a lower bearing holder 15 mounted at the through hole 13 passing through the center of the stator 12 by a bearing stopper 30 together with felt cloth 34 infused with a lubricating oil and placed in contact with the bearings 16 and 17. In addition, at the lower end of the rotating shaft 2, a sensor magnet 18 that indicates the position of a permanent magnet 11 at the rotor 5 is press-fitted, and with the sensor magnet 18 held by a push nut 79 along the direction of the axis of the rotating shaft 2, the distance between the sensor magnet 18 and a plurality of Hall elements 20 provided at the control board 19 is maintained at a constant length.

The sensor magnet 18 is mounted at the rotating shaft 2 through an opening 21 formed at the control board 19, and a flange portion 22 formed at an end of the sensor magnet 18 widens along the radial direction under the control board 19, with the plurality of Hall elements 20 provided along the rear side of the control board 19 at positions facing opposite the flange portion 22. In addition, the Hall elements 20 accurately detect the position of the permanent magnet 11 at the rotor 5 by detecting the magnetism of the sensor magnet 18 and based upon the results of the detection, generate a rotating magnetic field at the stator 12 with the excitation circuit provided at the control board 19. It is to be noted that a washer group 23 constituted of a plurality of washers is provided between the sensor magnet 18 and the bearing 17 to reduce the sliding resistance manifesting between the sensor magnet 18 and the bearing.

The upper end of the rotating shaft 2 constitutes an interlocking end 3 at which the fan 4 is secured, and the rotor 5 is secured under and near the interlocking end 3. The rotor 5 is constituted of a boss portion 7 that is press-fitted and secured to the rotating shaft 2, an umbrella portion 9 widening in an umbrella shape from the boss portion 7 and having a plurality of ventilation holes 8 formed therein, a cylindrical portion 10 that extends downward from the outermost circumferential edge of the umbrella portion 9 and a plurality of magnets 11 provided at the internal circumferential side surface of the cylindrical portion 10.

The sliding resistance of a thrust stopper 6 that holds the rotor 5 along the axial direction is reduced by providing a washer 24 between the thrust stopper 6 and the bearing 16. At the thrust stopper 6, a through hole 26 through which the rotating shaft 2 passes, a cylindrical portion 27 at which of the through hole 26 is formed and a circumferential wall 29 expanding along the radial direction from the upper end of the cylindrical portion 27 conforming to the contour of the umbrella portion 9 at the rotor 5 and extends downward from the circumferential edge over a specific width are formed. In addition, an oil guide 30 that gradually inclines downward from the sliding contact surface at which the cylindrical portion 27 slides in contact with the washer 24 toward the outside along the radial direction is formed at the lower end surface of the cylindrical portion 27. An upper end 32 of the bearing holder 14 is set in the space between the oil guide 30 and the circumferential wall 29, so that the lubricating oil dripping from the oil guide 30 is returned to the felt 34 with a high degree of reliability and that dust from the outside is prevented from becoming adhered to the bearing 16.

The stator 12 comprises a stator core 35 constituted of a core formed by laminating silicon steel plates over numerous stages, an upper insulating cover 36 and a lower insulating cover 37 mounted to enclose the stator core 35 from above and below and the exciting coil 38 wound around the stator core 35 insulated by the upper and lower insulating covers 36 and 37.

In addition, the lower insulating cover 37 is provided with a leg 42, and the front end of the leg 42 is held between elastic members 43 and 44 and is also clamped and secured between the upper case member 46 and the lid 47 constituting the case housing 45. Thus, the stator 12 is secured to the case housing 45 and the bearing holders 14 and 15 are secured at the through hole 13 of the stator 12, to allow the rotating shaft 2 to stand upright rotatably relative to the case housing 45 . It is to be noted that the position of the lid 47 is set with a pin 48 and is fixed with a screw 49.

In the brushless motor 1 structured as described above, in which the heat sink 56 is constituted of a contact portion 56B in contact with the FETs 55, which constitute means for switching, via a plate 56 and a heat radiating portion 56A provided continuously with the contact portion 56B and exposed through the opening 57 at the case housing 45, the potential at the heat sink 56 is equalized to the potential on one side (either the positive side or the negative side) of the power supply line provided on the control board 19 and the electronic parts on the control board 19 are protected from the heat mainly generated at the heat sink 56 by providing a protective member 60 between the heat sink 56 and the power supply line.

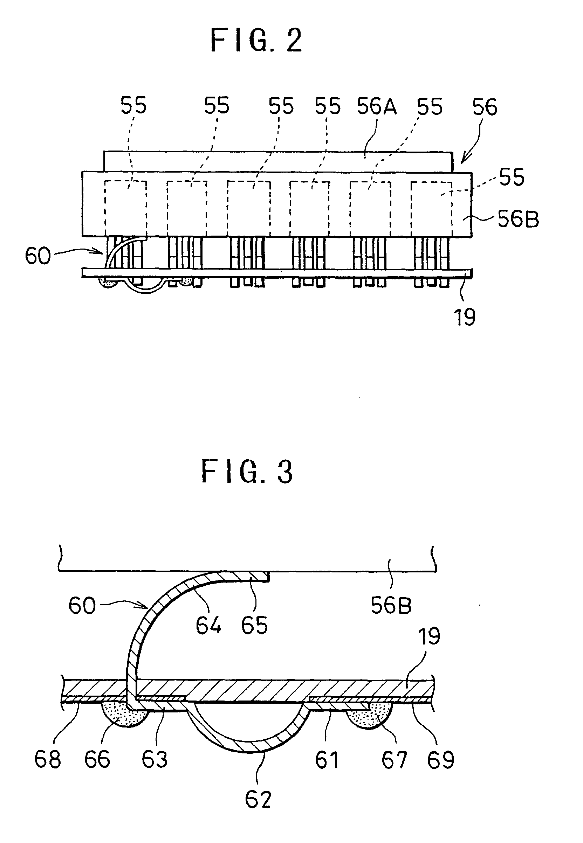

The protective member 60 in the first embodiment illustrated in FIGS. 2 and 3 comprises a thermal fuse mechanism constituted of a spring portion 62 bridging specific printed wirings 68 and 69 provided on the control board 19 and achieving a specific degree of elasticity and solderings 66 and 67 that respectively secure terminals 61 and 63 at the two ends of the spring portion 62 to the printed wirings 68 and 69 and become melted at a specific temperature and a potential-equalizing mechanism constituted of a shorting portion 64 extending out of the terminal 63 at one end of the spring portion 62 and passing through the control board 19 toward the heat sink with an end 65 thereof placed in contact with the contact portion 56B of the heat sink.

Thus, when the heat sink 56 becomes charged with static electricity, the static electricity can be allowed to flow to one side of the power supply line from the contact portion 56B via the shorting portion 64, thereby successfully preventing the heat sink 56 from becoming charged with the static electricity. In addition, if the temperature of the electronic parts is raised to an abnormally high level and, in particular, if an unusually large quantity of heat is generated at the FETs 55 to be transferred to other electronic parts via the printed wirings 68 and 69 on the control board 19 and the like, resulting in the temperature of the heat sink 56 rising to an abnormally high level due to the abnormal heat generation at the FETs 55, the solderings 66 and 67 become melted so that either the terminal 61 or 63 at one end is allowed to swing upward through the elasticity of the spring portion 62 to cut off the power supply line, thereby effectively preventing thermal damage to the various electronic parts.

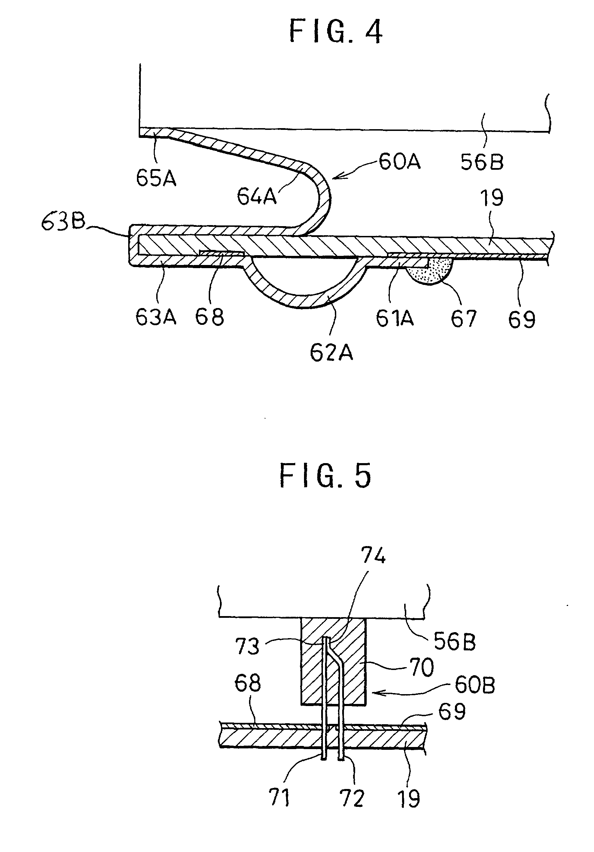

While an explanation is given below on other embodiments, the same reference numbers are assigned to elements structured identically or achieving identical advantages to those in the previous embodiment to preclude the necessity for repeated explanation thereof. A protective member 60A in the second embodiment illustrated in FIG. 4 comprises a thermal fuse mechanism constituted of a spring portion 62A bridging specific printed wirings 68 and 69 provided on the control board 19 and achieving a specific degree of elasticity, a soldering 67 that secures one end 61A of the spring portion 62A to one of the printed wirings, i.e., the printed wiring 69 and becomes melted at a specific temperature and a clip portion 63B that places another end 63A of the spring portion 62A in contact with the other printed wiring 68 and secures the other end 63A of the spring portion 62A to the control board 19, and a potential-equalizing mechanism that is constituted of a shorting portion 64A extending out of the clip portion 63B at the spring portion 62A toward the heat sink with an end 65A thereof coming into contact with the contact portion 56B of the heat sink. As a result, advantages similar to those in the first embodiment are achieved.

A protective member 60B in the third embodiment of the invention shown in FIG. 5 is constituted of a block-type thermal fuse. The block type thermal fuse 60B comprises a pair of terminals 71 and 72 each connected to one of the specific printed wirings 68 and 69 provided on the control board 19 and a thermosensitive portion 70 that holds ends (contact terminals) 73 and 74 of the pair of terminals 71 and 72 on one side by forcibly placing them in contact with each other and becomes melted at a specific temperature. In the addition, the thermosensitive portion 70, which is constituted of a conductive material, is placed in contact with the contact portion 56B of the heat sink 56. As a result, the static electricity charged at the heat sink 56 is allowed to be discharged to either line 68 or line 69 of the power supply lines via the thermosensitive portion 70 and the terminal 71 or 72, and also, if the temperature of the heat sink 56 reaches a specific level, the thermosensitive portion 70 becomes melted to disengage the contact terminal 73 or 74 to disconnect the power supply lines, thereby achieving advantages similar to those achieved in the preceding embodiments.

### INDUSTRIAL APPLICABILITY

As explained above, according to the present invention provided with a protective member having a thermal fuse mechanism that protects electronic parts from heat and a potential-equalizing mechanism that protects the electronic parts from static electricity provided as an integrated unit, the number of required parts can be reduced and, at the same time, an improvement in the assemblability of electronic parts is achieved.

## Claims

1. A brushless motor, comprising: a rotating shaft (2); a rotor (5) secured to said rotating shaft; a plurality magnets (11) provided at the internal circumferential surface of said rotor (5); a stator (12) that faces the magnets (11) to generate a rotating magnetic field; an exciting coil (38) wound around said stator (12); a control board (19) having a drive circuit provided with a plurality of means for switching (55) capable of switching the direction of an electric current supplied to said exciting coil (38) as necessary; a case housing (45) that houses said control board (19); and a heat sink (56) constituted of a contact portion (56B) that comes into contact with said plurality of means for switching (55) and a heat radiating portion (56A) exposed to the outside of the housing, **characterized by** further comprising
a protective member (60; 60A; 60B) achieved by integrating a potential-equalizing mechanism (64; 64A; 70-72) that equalizes the potential at said heat sink (56) to the potential at one side of a power supply line (68, 69) of the drive circuit provided on said control board (19) and a thermal fuse mechanism (61-63; 61A-63A; 70-72) provided on said control board (19).

2. A brushless motor described in claim 1, **characterized in that**,
in said protective member (60), said thermal fuse mechanism (61-63) comprises a spring portion (62) bridging between a power supply line (68) on one side and a power supply line (69) on the other side in the control board (19) wiring and achieving a specific degree of elasticity and a soldering (66, 67) that secures each of the ends (61, 63) of said spring portion (62) to one of said lines (68, 69) and becomes melted at a specific temperature, and said potential-equalizing mechanism is constituted of a shorting portion (64) that extends out of one end of said spring portion (62) and comes in contact with said heat sink (56).

3. A brushless motor described in claim 1, **characterized in that**,
in said protective member (60A), said thermal fuse mechanism (61A-63A) is constituted of a spring portion (62A) bridging between a power supply line (68) on one side and a power supply line (69) on the other side in the control board (19) wiring and achieving a specific degree of elasticity, a soldering (67) that secures one end (61A) of said spring portion (62A) to one of the lines and becomes melted at a specific temperature and a clip portion (63B) that secures the other end (63A) of said spring portion (62A) to said control board (19), and said potential-equalizing mechanism is constituted of a shorting portion (64A) that extends out of said clip portion (63B) at one end of said spring portion (62A) and comes in contact with said heat sink (56).

4. A brushless motor described in claim 1, **characterized in that**,
in said protective member (60B), said thermal fuse mechanism may be constituted of a block type thermal fuse (70-74) bridging between a power supply line (68) on one side and a power supply line (69) on the other side in the control board (19) wiring, and said potential-equalizing mechanism is achieved by constituting a thermosensitive surface (70) of said block-type thermal fuse with a conductor and placing it in contact with said heat sink (56).

## Patentansprüche

1. Bürstenloser Motor, der folgendes umfaßt: eine rotierende Welle (2), einen an der rotierenden Welle angebrachter Rotor (5); mehrere Magnete (11), die an der Innenumfangsfläche des Rotors (5) vorgesehen sind; einen Stator (12), der den Magneten (11) zugewandt ist und ein rotierendes Magnetfeld erzeugt; eine um den Stator (12) gewickelte Erregerspule (38); eine Steuerplatine (19) mit einer Ansteuerschaltung, die mit mehreren Mitteln zum Schalten (55) versehen ist, die die Richtung eines der Erregerspule (38) zugeführten elektrischen Stroms gegebenenfalls umschalten kann; ein Ummantelungsgehäuse (45), das die Steuerplatine (19) aufnimmt; und einen Kühlkörper (56), der aus einem Kontaktabschnitt (56B) besteht, der die mehreren Mittel zum Schalten (55) kontaktiert, und einen wärmeabstrahlenden Abschnitt (56A), der zur Außenseite des Ummantelungsgehäuses exponiert ist, **dadurch gekennzeichnet, daß** er weiterhin folgendes umfaßt:
ein Schutzglied (60; 60A; 60B), das erzielt wird durch Integrieren eines Potentialausgleichsmechanismus (64; 64A; 70-71), der das Potential an dem Kühlkörper (56) auf das Potential auf einer Seite einer Stromversorgungsleitung (68, 69) der Ansteuerschaltung ausgleicht, die auf der Steuerplatine (19) vorgesehen ist, und
eines Wärmesicherungsmechanismus (61-63; 61A-63A; 70-72), der auf der Steuerplatine (19) vorgesehen ist.

2. Bürstenloser Motor nach Anspruch 1, **dadurch gekennzeichnet, daß** bei dem Schutzglied (60) der Wärmesicherungsmechanismus (61-63) einen Federabschnitt (62) umfaßt, der zwischen einer Stromversorgungsleitung (68) auf einer Seite und einer Stromversorgungsleitung (69) auf der anderen Seite in der Verdrahtung der Steuerplatine (19) überbrückt und einen spezifischen Elastizitätsgrad und eine Lötung (66, 67) erzielt, die jedes der Enden (61, 63) des Federabschnitts (62) an einer der Leitungen (68, 69) befestigt und bei einer spezifischen Temperatur geschmolzen wird, und der Potentialausgleichsmechanismus aus einem kurzschließenden Abschnitt (64) besteht, der sich aus einem Ende des Federabschnitts (62) herauserstreckt und den Kühlkörper (56) kontaktiert.

3. Bürstenloser Motor nach Anspruch 1, **dadurch gekennzeichnet, daß**
bei dem Schutzglied (60A) der Wärmesicherungsmechanismus aus einem Federabschnitt (62A) besteht, der zwischen einer Stromversorgungsleitung (68) auf einer Seite und einer Stromversorgungsleitung (69) auf der anderen Seite in der Verdrahtung der Steuerplatine (19) überbrückt und einen spezifischen Elastizitätsgrad erzielt, einer Lötung (67), die ein Ende (61A) des Federabschnitts (62A) an einer der Leitungen befestigt und bei einer spezifischen Temperatur schmilzt, und einem Clipabschnitt (63B), der das andere Ende (63A) des Federabschnitts (62A) an der Steuerplatine (19) befestigt, und der Potentialausgleichsmechanismus aus einem kurzschließenden Abschnitt (64A) besteht, der sich aus dem Clipabschnitt (63B) an einem Ende des Federabschnitts (62A) heraus erstreckt und den Kühlkörper (56) kontaktiert.

4. Bürstenloser Motor nach Anspruch 1, **dadurch gekennzeichnet, daß** bei dem Schutzglied (60B) der Wärmesicherungsmechanismus aus einer blockartigen Wärmesicherung (70-74) bestehen kann, die zwischen einer Stromversorgungsleitung (68) auf einer Seite und einer Stromversorgungsleitung (69) auf der anderen Seite in der Verdrahtung der Steuerplatine (19) überbrückt, und der Potentialausgleichsmechanismus erzielt wird, indem eine wärmeempfindliche Oberfläche (70)der blockartigen Wärmesicherung mit einem Leiter konstituiert wird und sie in Kontakt mit dem Kühlkörper (56) plaziert wird.

## Revendications

1. Moteur sans balai comprenant : un arbre rotatif (2), un rotor (5) fixé audit arbre rotatif ; plusieurs aimants (11) prévus contre la surface circonférentielle interne dudit rotor (5) ; un stator (12) orienté vers les aimants (11) pour générer un champ magnétique rotatif ; une bobine d'excitation (38) enroulée autour dudit stator (12) ; un tableau de contrôle (19) possédant un circuit d'entraînement équipé de plusieurs moyens de commutation (55) capables de soumettre à une commutation la direction d'un courant électrique alimenté à ladite bobine d'excitation (38), en fonction des nécessités ; un carter (45) dans lequel vient se loger ledit tableau de contrôle (19) ; et un dissipateur thermique (56) constitué par une portion de contact qui entre en contact avec lesdits plusieurs moyens de commutation (55) et par une portion de rayonnement thermique (56A) exposée à l'extérieur du carter, **caractérisé par le fait qu'**il comprend en outre :
un élément de protection (60 ; 60A ; 60B) que l'on obtient en intégrant un mécanisme procurant une équipotentialité (64 ; 64A ; 70 - 72) qui corrige le potentiel audit dissipateur thermique (56) par rapport au potentiel régnant d'un côté de la ligne d'alimentation électrique (68, 69) du circuit d'entraînement prévu sur ledit tableau de contrôle (19), et un mécanisme de fusible thermique (61 - 63 ; 61A - 63A ; 70 - 72) prévu sur ledit tableau de contrôle.

2. Moteur sans balai tel que décrit à la revendication 1, **caractérisé en ce que**, dans ledit élément de protection (60), ledit mécanisme de fusible thermique (61 - 63) comprend une portion de ressort (62) établissant une liaison par pont entre une ligne d'alimentation électrique (68) d'un côté et une ligne d'alimentation électrique (69) de l'autre côté dans le câblage du tableau de contrôle (19) et procurant un degré spécifique d'élasticité, et une matière d'apport de brasage tendre (66, 67) qui permet de fixer chaque extrémité (61, 63) de ladite portion de ressort (62) à une desdites lignes (68, 69) et qui entre en fusion à une température spécifique, ledit mécanisme procurant une équipotentialité étant constitué d'une portion de court-circuit (64) qui s'étend au-delà d'une extrémité de ladite portion de ressort (62) et qui entre en contact avec ledit dissipateur thermique (56).

3. Moteur sans balai tel que décrit à la revendication 1, **caractérisé en ce que**, dans ledit élément de protection (60A), ledit mécanisme de fusible thermique (61A - 63A) est constitué par une portion de ressort (62A) établissant une liaison par pont entre une ligne d'alimentation électrique (68) d'un côté et une ligne d'alimentation électrique (69) de l'autre côté dans le câblage du tableau de contrôle (19) et procurant un degré spécifique d'élasticité, par une matière d'apport de brasage tendre (67) qui permet de fixer une extrémité (61A) de ladite portion de ressort (62A) à une des lignes et qui entre en fusion à une température spécifique, et par une portion de fixation à ressort (63B) qui fixe l'autre extrémité (63A) de ladite portion de ressort (62A) audit tableau de contrôle (19), ledit mécanisme procurant une équipotentialité étant constitué d'une portion de court-circuit (64A) qui s'étend au-delà de ladite portion de fixation à ressort (63B) à une extrémité de ladite portion de ressort (62A) et qui entre en contact avec ledit dissipateur thermique (56).

4. Moteur sans balai tel que décrit à la revendication 1, **caractérisé en ce que**, dans ledit élément de protection (60B), ledit mécanisme de fusible thermique peut être constitué d'un fusible thermique de type bloc (70 - 74) établissant une liaison par pont entre une ligne d'alimentation électrique (68) d'un côté et une ligne d'alimentation électrique (69) de l'autre côté, dans le câblage du tableau de contrôle (19), ledit mécanisme procurant une équipotentialité étant réalisé en constituant une surface thermosensible (70) dudit fusible thermique de type bloc à l'aide d'un conducteur et en mettant ladite surface en contact avec ledit dissipateur thermique.
